# EUROPEAN PATENT SPECIFICATION

(11) **EP 0 969 963 B1**
(45) Date of publication and mention of the grant of the patent: **28.01.2004**
(21) Application number: 98912516.6
(22) Date of filing: 26.03.1998
(51) Int. Cl.: B32B 5/08, B32B 19/02, B32B 31/20, E04C 2/292

(54) **METHOD FOR PRESSING OF SANDWICH PANELS**
VERFAHREN ZUM PRESSEN VON SANDWICHPLATTEN
PROCEDE PERMETTANT DE REALISER LE PRESSAGE DE PANNEAUX SANDWICHS

(30) Priority: 26.03.1997 FI 971292
(43) Date of publication of application: 12.01.2000
(73) Proprietor: Paroc Group Oy Ab, 01300 Vantaa (FI)
(72) Inventor: HESELIUS, Lars-Henrik, FIN-21600 Pargas (FI); WILLMAN, Tarmo, FIN-20780 Kaarina (FI); BRUNILA, Esko, FIN-21600 Pargas (FI)
(74) Representative: Haimelin, Jukka Ilmari
(86) International application number: PCT/FI1998/000274
(87) International publication number: WO 1998/042503

(56) References cited:
- EP-A- 0 030 714
- WO-A-90/07040
- WO-A-95/31331
- GB-A- 1 397 299
- GB-A- 2 247 643

## Description

Sandwich panel constructions have been used for quite a long time in buildings and ships. In buildings their first appearance was in the form of thin concrete slabs separated from each other by an insulating layer called the core. Bridges were typically provided between the slabs, because the core in these structures as a rule was incapable of carrying the forces needed to maintain the integrity of the sandwich construction. Later, a sandwich construction was introduced in which the facing was formed by a thin skin layer such as a metal sheet or a laminated layer. These sandwich constructions were typically used as partitions in office and industrial spaces or as bulkheads in ships.

Concurrently with the introduction of thin and flexible facings in the sandwich construction emerged the need for a stiffer core. While this need could be satisfied with expanded polymer materials, other factors such as those related to fire resistance and sound isolation regulations directed the practice so that mineral wool became the core material of choice. To achieve an adequate stiffness of the core, sometimes it was sufficient to use a core material of higher density. However, in most cases the core was preferentially made by virtue of a method called the lamellar technique.

In the manufacture of mineral wool slabs, fiber orientation and layering are inherently formed so that the dominating fiber alignment becomes parallel to the slab plane and that the slab splitting into thinner layers parallel with the slab plane will occur more readily than into layers with other orientation. This kind of fiber alignment and layer formation causes that manufactured mineral wool slabs will be highly anisotropic. Resultingly, the slab will exhibit nonuniform properties such an essentially smaller resistance to deformation under pressure which is applied orthogonally to the slab surface than in other directions. Furthermore, as the thermal isolation capability of the slab is highest in its thickness direction, it is obvious that mineral wool has chiefly been used in this inherent fiber orientation.

However, thermal isolation capability is not always the only quality, not even the principal one of those required from a mineral wool product. Sometimes a high resistance of the product to compressing pressure is most desirable. This property can be improved by increasing either the density of mineral wool or the amount of binder, or even both. However, these techniques increase the manufacturing costs of the product. An alternative approach is to modify the fiber-structure through realignment of the fibers. Herein, the reduction in the thermal insulation capability is readily compensated for by using a slightly increased thickness which as a rule does not cause an increase of production costs as high as that resulting from the use of a higher-density wool grade or a greater amount of binder.

Realignment can be carried out in many different ways. One of the most radical techniques is to rotate the principal alignment of fibers during slab manufacture so that they will become orthogonally aligned instead of being laid in parallel to the principal plane of the mineral wool product.

The latter approach is employed in the so-called lamellar technique. Here, conventional mineral wool slabs with the binder fully cured are cut into relatively narrow strips used as lamellar members. These are rotated 90° about the longitudinal axis and assembled into a new planar structure called a lamellar slab. Resultingly, the lamellar slab can offer a vastly improved resistance to deformation under external pressure applied to the slab surface, as compared to the initial slab from which the lamellar members were cut. This technique has been used in a plurality of applications, an example of which being disclosed, e.g., in WO 90/07039.

While also other fiber realignment techniques are known in the art, they are more or less based on the same principle. One typical method comprises cutting the lamellar members from a mineral wool mat wetted with uncured binder, perpendicularly to its travel direction, prior to its entry into the curing oven, whereafter the cut lamellar members are rotated 90° about their longitudinal axis and then placed side-by-side under a moderate pressure so as to form a new mat of realigned material which is then passed into the curing oven. There, the curing of the binder not only bonds the fibers to each other, but also forms interlamellar bonds of a certain strength.

Alignment of the lamellar members prior to their entry into the curing oven may also be carried out so that the travelling mineral wool mat is slit in the machine direction into continuous, narrow strips which are rotated 90° about their longitudinal axis and then aligned side-by-side under a moderate pressure so as to form a new travelling mat of realigned material which is subsequently passed into the curing oven, where the manufacturing process is continued as described above.

These exemplifying methods give a mineral wool structure of genuine lamellar character in which the degree of anisotropicity is high. Also alternative techniques are also known in the art that can render a slab structure of less pronounced lamellar character for less demanding applications. One of such realignment techniques is longitudinal compression of the fiber mat. In this method, the travelling mineral wool mat is impeded as it is being conveyed into the curing oven. As a result of the travel slow-down, the mat in which the fiber alignment initially is parallel with the plane of the mat will become more or less compressed in its longitudinal direction, whereby its fibers are aligned at a blunt angle with respect to the principal plane of the travelling mat. After passing through the curing oven, such a longitudinally compressed mineral wool mat will exhibit qualities falling between those of a conventional mineral wool slab and a genuine lamellar slab. In principle, the longitudinally compressed slab will not be more uneconomical to produce than a conventional mineral wool slab, while the manufacture of a slab with a genuine lamellar structure will always involve essentially higher costs.

Still closer to the properties of a genuine lamellar structure reaches a technique in which the mineral wool mat is initially made relatively thin and the mat is then pleated in a meandering manner so as to form a thicker mat. Such a pleated mineral wool mat will have a fiber alignment essentially orthogonal to the principal plane of the mat, with the exception of the fibers situated close to both exterior planes of the pleated mat. When starting from a sufficiently thin mineral wool mat, this deviation from the structure of a genuine lamellar slab will be negligible. Hence, this mineral wool pleating technique gives slab structures essentially equal by its properties to those of genuine lamellar structures, yet with more economical manufacturing techniques resulting in a realigned mineral wool slab emerging directly from the production line as a "pseudolamellar" slab.

In the context of the following description it is assumed that the mineral wool slabs used in sandwich constructions are of the genuine lamellar type made from separate interbonded strips. It must be understood, however, that the technique disclosed herein is also applicable in conjunction with other mineral wool constructions of more or less equivalent properties.

Later development in the art has expanded the use of metal sheet plated sandwich panels into such applications as linings of exterior walls and ceilings. For these purposes, the length of sandwich building components must be made essentially longer than is generally required in partitions and ship bulkheads. Such elongated sandwich constructions need to be designed for maximum strength based on extensive optimization of the structural elements used in the sandwich constructions and, moreover, of the mutual interaction of said elements. The same requirements also apply to the manufacturing technology of the constructions.

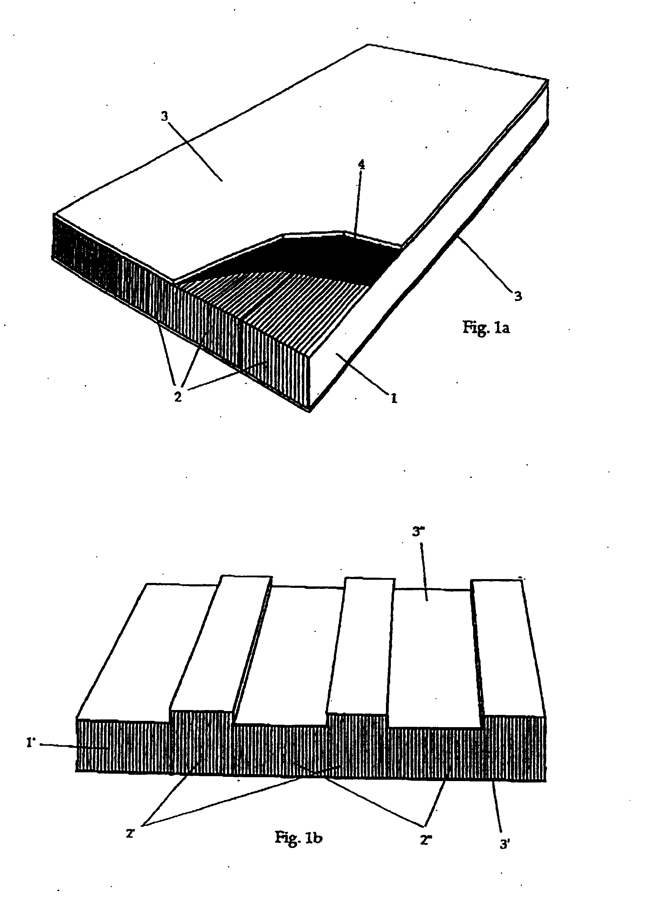

Referring to Fig. 1a, the manufacture of this type of a sandwich construction in principle comprises forming a realigned mineral wool slab 1, herein shown to be a lamellar structure consisting a plurality of adjacently aligned lamellar members 2 or adjacent rows of such lamellar members, and then lining the thus formed mineral wool slab from both sides with a facing 3, generally made from a sheet, after an adhesive layer 4 has been applied the exterior sides of the mineral wool slab and the interior sides of the facings to be bonded thereto. The cross-sectional profile of the sheet facing need not necessarily have a perfectly planar profile, but rather, can be shaped so as to include orderly deviations from its main plane in the form of ridges or grooves, as well as contoured edges.

Generally, the realigned lamellar members are made of equal height so as to form a lamellar mineral wool slab with planar sides. In some cases, however, it may be desirable to achieve, e.g., a specific aesthetic effect, whereby the mineral wool slab can be assembled from strips of varying height, possibly also of varying width.

This technique is illustrated in Fig. 1b. Herein, the lamellar members 2' are made of larger height and narrower width than lamellar members 2". Resultingly, the lamellar slab 1' will have a contoured surface. One facing sheet 3' of the structure is planar as shown in Fig. 1a, while the other facing sheet 3" is contoured in the same manner as the top surface of the lamellar structure. Both facings have downward bent edges which connect to the edge surfaces of the lamellar structure.

In practice, contoured lamellar cores can be fabricated only by using mineral wool cores assembled from separate strips.

While the adhesive is preferentially of a thermosetting type, also self-curing and externally curable types can be used such as those requiring exposure to ultrasound, for instance. In a pressing operation carried out under heating or other externally applied influence, the facing is bonded to the mineral wool core and the adhesive is cured. To obtained a controlled pressing result, the pressing is performed against a stop which determines the minimum distance between the press platens, and thus, the final thickness of the sandwich product in the press.

This dimension controlled pressing technique to a preset, however, give inferior results in the form of, e.g., uneven exterior surfaces and low-quality adhesive bonds. As to the function of the product, this shortcoming can cause visual problems, because even very small unevenness occurring in the form of panel surface dimpling or wrinkling is readily noticeable, particularly on entirely planar panels that are the ones most commonly used. Simultaneously, the strength of the product is reduced, which is not generally acceptable. To overcome these problems, attempts have been made to use a larger amount of adhesive, thicker facing, a mineral wool grade of higher density combined with an increased amount of binder, among others, which measures either cause a strong increase in production costs and/or simultaneously fail to improve the end result in a satisfactory manner or to give a sufficiently controllable end result. Last but not the least annoying point herein is that the same costly measures must also be applied to those specimen of produced components which happen to be free of the above-described defects.

This background has caused that extensive and thorough investigations and tests have conducted, which have led to the present invention. The studies performed have revealed that the primary problems can be attributed partially to stiffness variations in the mineral wool material, partially to small and unintentional thickness variations in the same, and further, to the internal stresses of the facing material that can be relieved during pressing, particularly if heat is applied.

The first of above-mentioned problems arises in all core materials having a realigned fiber structure and cannot be solved in a practicable manner if the pressing step is carried out as a dimension-controlled operation terminated at a preset gap between the press platens.

The second of these primary problems is particularly pronounced in lamellar core structures and can be partially solved in conjunction with the manufacture of the lamellar realigned mineral wool core. Herein, two approaches are feasible. One technique is to first assemble a stack of conventional mineral wool boards which are subsequently bonded to each other before cutting the lamellar members off from them. Hence, all the lamellar members required to form the fabricated, lamellar realigned mineral wool core are cut from the stack of the initial boards in a single operation using one tool only which generally is a band saw or a band knife. However, this method is not suitable for use in the manufacture of a contoured sandwich product.

The bonding of the initial mineral wool boards to each other can be made using a binder, or alternatively, as disclosed in patent publication SE 368 949, by glueing an external bonding layer to that end surface of the board stack which is parallel to the plane of the lamellar slab to be cut off from stack, whereby the bonding layer also forms an exterior surface in the sandwich construction being manufactured.

Both methods have significant drawbacks. Interbonding of the initial mineral wool boards into a stack causes greater costs, lower thermal insulation capability and reduced fire resistance properties. Respectively, the external bonding layer is difficult to adhere to the end surface of a mineral wool board stack in a controllable manner. The use of an additional material layer for external bonding also involves higher production costs.

According to the second technique, a plurality of strips are cut either simultaneously or in successive steps from a mineral wool slab and then interbonded so as to form a lamellar realigned mineral wool slab in which the underside is inherently planar and smooth, while the top side requires grinding to make it smooth and parallel to the underside. Herein is needed an additional work phase which involves dust release and material losses, particularly in the manufacture of a contoured sandwich construction. Furthermore, the maintenance and operation of the grinding equipment cause costs that are by no means negligible.

In practice it is inevitable that the lamellar members have small, unintentional variations in their height and that the lamellar realigned mineral wool slab, which is made by interbonding the lamellar strips, has at least one side not entirely smooth, or in the case of a contoured lamellar slab, a cross section which is not fully regular.

The goal of the present invention is achieved through replacing the conventional pressing step, which is generally carried out to a preset thickness determined by a stop between the press platens, by a novel pressing technique, performed under heating if so required, said technique comprising pressing with a pressure whose value is determined within a certain interval by the properties of the elements used in the sandwich construction being manufactured, that is, the mineral wool core, the facing and the binder. Herein, the two endpoints of the pressing are governed by two different phenomena.

The first of these phenomena determines the lower limit. The primary target at this point is to achieve an optimal bonding result. The quality of bonding can be controlled by way of examining the bond strength in a tensile strength test in which the facings is pulled apart from the mineral wool core. The separation can take place either as a cohesive failure or an adhesive failure. In the cohesive failure, separation occurs in one of the materials included. Here, the failure normally starts from a part of the mineral wool containing no adhesive, that is, at a certain deep in the mineral wool slab. Sometimes, the adhesive can fail. An adhesive failure takes place at the interface between the mineral wool core and the adhesive layer, or alternatively, at the interface between the adhesive layer and the facing. It has now turned out that the strongest sandwich construction will be obtained if the pressing step is carried out using so high a pressure that the risk of adhesive failure in the finished product is eliminated.

Hence, the lower limit of applied pressure is equal to the lowest pressure at which no adhesive failure is found to occur in the product. This is the first step in the implementation of the basic idea of the invention.

With the gradual increase of the applied pressure above this lower limit, eventually a level will be reached at which it can have negative effects to the mineral wool structure, whereby the strength of the sandwich construction is reduced. Hence, it is essential to ensure that the mineral wool core has a sufficient strength to receive the applied pressure without failure. Conventionally, this prerequisite condition is met primarily by the selection of a mineral wool grade of suitable density and binder content, in some cases complemented by choice of the degree of the realignment of the wool fibers. Other possible parameters which can be varied are the diameter of fibers and the fiber content of the wool. The damaging effect of pressure may begin already at the yield pressure limit of the mineral wool core, as will be described in detail below.

In order to determine the maximum pressure, which also is the upper limit for the interval within which the pressure shall remain according to the invention, it is necessary to take into consideration on one hand how a realigned mineral wool behaves under pressure and, on the other hand, that the realigned mineral wool slab serving as the core of the sandwich construction is formed from individual members of nonhomogeneous deformation properties.

A piece of realigned mineral wool show under pressure principally the behaviour as shown in Fig. 3. The horizontal axis of the plot indicates the deformation and the vertical axis is the applied pressure. The axes are not calibrated in absolute units, because the actual values of the plot are dependent on the density, binder content, degree of realignment and other parameters. The diagram illustrates the relatively simple behaviour of a genuine lamellar mineral wool slab, but in principle the description of the deformation mechanism is applicable to other types of realigned mineral wool constructions as well.

Changes in the slab structure under pressure are not amenable to description by strictly defined terms. Therefore, the following description is based on a modelling theory, which in spite of the great number of experimental data gathered nevertheless represents a model. At the origin of the graph, the applied pressure is zero and thence the deformation also is zero. With an increasing pressure, the initial deformation of the test piece turns into a slower rate of deformation within the initial region of the curve indicated by letter A in the diagram. This region, called the adaptive yielding phase, represents the phase during which the irregularly shaped tops of the mineral wool slab successively yield under the applied pressure so as to become level with the smooth surfaces of the compression plates of the test equipment. Herein, it is easy to ascertain how the pressing plates first meet one or some projecting fibres which can exert a negligible resistance only. Then, as more fibers and fiber bunches become engaged with the compressive force, the resistance to deformation will gradually reach a higher value.

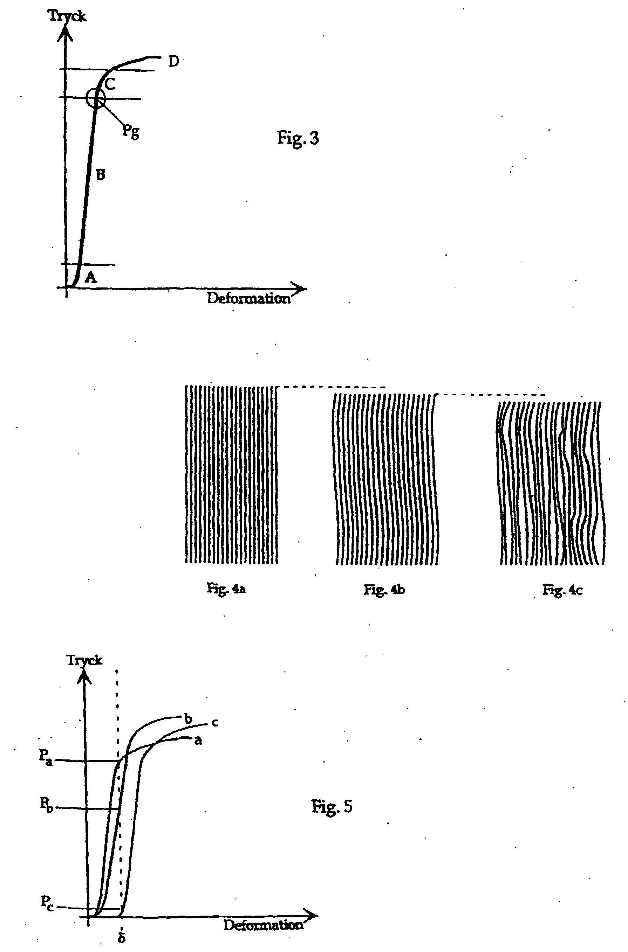

Gradually a situation is reached where the entire body of the mineral wool structure will be deformed under pressure. Here, the curve enters a region B called the elastic region in which the relationship between the increasing pressure and the deformation is essentially proportional. In this region, a coherent compression of the core occurs in accordance with the modelling theory, where the ideal fiber planes drawn as vertical lines in Fig. 4a begin to yield in the vertical direction, still maintaining the mutual spacing and parallelity. This process is illustrated in Fig. 4b, in which the coherent deformation of the fiber planes is drawn as S-shaped lines.

Depending on the homogeneity of the fiber layers and their mutual similarity, the elastic region may extend over a larger or shorter deformation interval. Also the elasticity is here almost thorough.

When the load pressure is increased to a sufficiently high value, the deformation enters an incoherent or chaotic crushing stage, where the fiber planes do not stay parallel anymore, corresponding to region C in Fig. 3 and Fig. 4c.

The transition point from the elastic region B to the incoherent crushing region C is called the yield pressure limit, and is marked as Pg in Fig. 3.

With a still heavier deformation, the structure will undergo a collapse in which the applied pressure need not be increased practically at all, while the deformation of the structure continues as indicated by region D in Fig. 3. This region is equivalent to the yield strength of steel, for instance. Within the region C, the capability of the mineral wool core to recover its initial thickness at decompression is partially lost and more so in region D. The transition from region C to D is called the compressive failure limit.

In materials consisting of essentially planar fiber layers, the yield pressure limit value can be about 70 - 80 % of the compressive failure limit value.

For materials consisting of nonplanar fiber layers and those having a noncoherent structure, the yield pressure limit is more difficult to determine. In these cases, the value of Pg is defined as a percentage of the compressive failure limit value, typically 70 %, or if the failure point cannot be determined, as the pressure causing a certain deformation, typically 1 %, in the material thickness.

The invention is based on the findings that the individual members forming a more or less realigned mineral wool slab can, on one hand, initially have different heights and, on the other hand, exhibit pressure-deformation curves of different shapes, but alike the curve in Fig. 3. This is illustrated in Fig. 5. Therein are plotted three pressure-deformation curves. Curve (a) represents a relatively stiff strip member with relatively planar top/bottom edges. Resultingly, the transition region is narrow, the elastic region of its pressure-deformation curve is quite steep and its yield pressure is rather low. Curve (b) shows the characteristics of a strip of equal height, but of less rigid nature, whereby also the transition region is wider, the elastic region of the pressure-deformation curve is less steep and the yield pressure is slightly higher. Finally, curve (c) represents a strip member of smaller height. Hence, it will begin to deform and contribute to the deformation resistance of the entire slab only after the two other members have undergone some degree of compressive deformation.

Now, it is obvious that with a certain degree of deformation δ in three lamellar members, corresponding to the curves (a), (b) and (c) of Fig. 5, the lamellar member b is within its elastic region under pressure Pb, while pressure Pa acting on lamellar member a has already caused an irreversible deformation in the structure of the member. By contrast, lamellar member c subjected to pressure Pc has not even passed the elastic region of its pressure-deformation curve.

As a result, a mineral wool slab will exhibit a characteristic which can be considered as an average of all its lamellar strips or members. Consequently a mineral woll slab as an entity has its individual adaptive and elastic regions and an individual yield pressure. The second basic concept of the present invention is to prevent the pressing pressure from exceeding the latter.

Accordingly, the invention comprises, by means of pressing to laminate a planar, realigned mineral wool slab with a thin, stiff facing, such as a polymer-coated sheet steel plate with an adhesive to both sides of the mineral wool slab, so as to form a sandwich construction, and thereby take care of that the pressing is conducted using a pressure within a pressure intervall which is on one hand limited by a minimum pressure P1 required to avoid the adhesive failure in the adhesive layer, and on the other hand by the average yield pressure limit P2 in pressing, whereby the basic elements of the sandwich construction, namely, the mineral wool core, the facing and the adhesive are selected so that P1 < P2.

The adhesive used can be of the thermosetting type, whereby heat is applied during the pressing step. Alternatively, the adhesive may be of such kind that it is curable by some other kind of external influence such as ultrasound, for instance, whereby said external influence is applied correspondingly during the pressing.

More precisely, the invention is based on the observation that, when the applied pressure is allowed to reach the elastic pressure limit of the mineral wool slab, the limit may already well have been exceeded for one or more of the adjacent members or strips in the slab. However, statistical and experimental studies have revealed that under normal conditions it is allowable to increase the lamination pressure up to 70 % of the averaged elastic pressure limit of the mineral wool slab without causing an essential damage to its structure. On a level of 50 % of the same limit the security is even higher.

As mentioned above, the description given herein is chiefly directed to a mineral wool slab formed from a plurality of separate realigned lamellar strips. However, the same principles are applicable to any mineral wool slab formed by some other type of realignment of fiber planes, whereby the lamellar strips can correspond different parts of the mineral wool slab.

While the sandwich constructions made in accordance with the above-described method typically exhibit very good structural properties, it is possible that one or both of the sides of the structure may show telegraphing bumps/dents due to an uneven thickness or elasticity in the underlying mineral wool slab after the pressing. Such a show-through of bumps/dents are most undesirable, particularly in facings which under certain lighting conditions may display the very minor deviations from a perfectly planar surface.

The surface wrinkling of a panel is most appropriately measured as the deviations of its surface profile expressed in mm/m, and an acceptable evenness is achieved if the deviations remain smaller than 0.5 mm/m. Also this has been investigated in conjunction with the present invention, and forms further a base for limitation, particularly when the mineral wool slab is comprised of lamellar strips assembled into a slab either side-by-side or in rows.

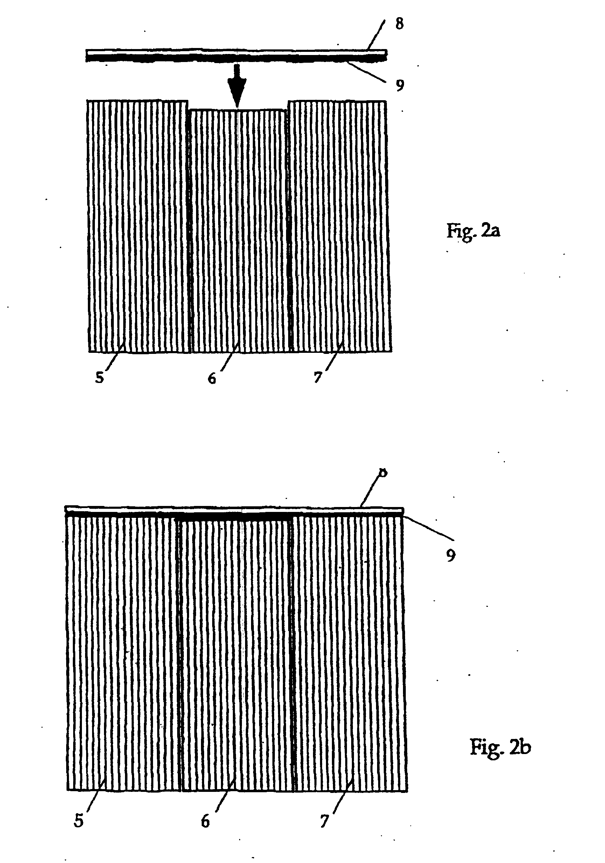

Here, through using a sufficiently high lamination pressure, the elimination of uneven spots on the core surface, caused by uncontrollable core thickness variations, takes place via two interacting partial processes. One of these partial processes involves a heavier compression of the excessively high lamellar strips or parts, and the other partial process comprises the flow of the adhesive so as to fill the height differences still remaining between two abuttingly laid members of different height in the slab. This is elucidated in Figs. 2a and 2b showing the disposition in which a number of lamellar members are assembled to form a planar surface intended to serve as substrate for a planar top facing. Fig. 2a illustrates the situation before pressing and Fig. 2b after pressing. In the diagrams there are shown three lamellar members 5, 6 and 7, a top facing 8 and an adhesive layer 9. While the adhesive layer 9 is drawn applied to the underside of the facing 8, but can in practice instead be applied to the top edge surfaces of the lamellar members 5 - 7.

Before pressing, the lamellar members have slightly different heights, whereby the lamellar member 6 is lower than the others. During pressing, all the lamellar members are subjected to the pressure, and are compressed. The members of greatest height are pressed more than the lower ones, whereby the deviations in the heights are almost completely equalized. The remaining height differences, if any, will be filled by the adhesive. This is the second partial process eliminating the effect of different lamellar element heights.

After pressing follows an elastic recovery toward the initial lamellar height. For the highest lamellar members, however, it occurs that the members of lesser height prevent, via the facing and the adhesive bond, them from recovering back to their initial height. The same effect works on the height variations that may occur in one and the same lamellar member as well as on unintentional deviations in the profile where the surface is contoured, as shown in Fig. If the height differences in the initial slab are not excessively large, which can be avoided by a careful, yet relatively practicable and cost-effective postgrinding of the individual lamellar members, the end result will be a mineral wool slab, including the adhesive layer, having an even thickness or correct contour. Consequently the facing fullfils a first prerequisity necessary to achieve a smooth or properly contoured surface.

During pressing, particularly if made under heating, it is possible that the internal stresses of the facing material will be released resulting in the appearance or amplification of wrinkles. Therefore, the pressure during the pressing step must be kept sufficiently high to even out such irregularities. To prevent wrinkles from reappearing after pressing in a disturbing degree, it is necessary to use an adhesive layer strong enough to suppress such a tendency. Consequently, the combination of the adhesive, the mineral wool core, the pressure applied during the pressing step and the heating cycle possibly employed must be designed so as to achieve a secure penetration of the adhesive into the wool, bonding thereof with the wool and reinforcement of the adhesive by the wool fibers. It should be possible for a skilled man, on the basis of the above introduction, to take the requirements of an actual facing into account and select a relevant starting point. Also the sufficient penetration of the adhesive into the mineral wool is easily verifiable.

Further, the pressure required in the pressing step can be affected by selecting an adhesive with a suitable flow and wetting qualities as well as by using a facing material of a low tendency to buckle.

Next, the selection of a proper pressure level P3 is discussed for the purpose of achieving, within the constraints of product quality specifications and the properties of the actual product elements used, an acceptable surface evenness for the product after pressing. In practice, the required surface evenness can be attained by simultaneously assuring that this minimum pressure is applied during pressing and that the actual elements have be chosen so as to make P2 > P3. Then, the lower limit for pressing pressure will thus be the higher of P1 and P3.

The evenness of the mineral wool core, particularly when comprised of adjacent realigned strips or rows of realigned strips, will be improved by subjecting the mineral wool slab, prior to and during its pressing, to compression applied in its plane orthogonal to the longitudinal direction of the slab. Thus, the forces acting on a member of a relatively lower strength are effectively transmitted to the adjacent members. An equivalent effect will be attained by subjecting the adjacent realigned lamellar strips or rows of realigned strips forming the mineral wool slab, prior to and during its pressing, to compression applied in its plan parallel with its longitudinal direction.

After the adhesive has cured during pressing, the applied pressure and/or compressive forces are maintained until a permanent effect has been attained.

It is essential that the mineral wool core is cleaned from loose particulate matter prior to the application of the adhesive. This operation can be carried out using a vacuum whose efficiency can be improved by passing the core slab through very thin, relatively strong air knives or curtains serving to detach the loose particulate matter from the mineral wool core surface.

As it has been found that particulate matter consisting of fiber pieces can adhere to the mineral wool slab by virtue of electrostatic forces, it is often possible to improve the cleaning effect by subjecting the adhering fiber pieces and immediate surroundings to the influence of a static eliminator.

The selection of a proper adhesive is important to both the technically and economically acceptable end result. Herein, polyurethane adhesives have been found to perform in a satisfactory manner. Particularly advantageous in this group are the two-component grades. Preferably, the adhesive is applied to the facing prior to lamination by pressing. The needed amount of adhesive is to some degree dependent on the density and structure of the mineral wool core, as well as the levelling capability required from the adhesive. Generally, the applied amount is in the range 100 - 400 g/m², advantageously about 200 g/m².

The mineral wool slabs serving as the starting material for the fabrication of the lamellar members and thence of the lamellar mineral wool slabs are advantageously made from a mineral wool having a density of 80 - 140 kg/m³ and a binder content of 2 - 5 %. Mineral wool slabs realigned by other techniques should also have at least these values of mineral wool density and binder content.

A technique, which has been found capable of offering improved evenness and visually more perfect facing surfaces in laminated sandwich element, is based on momentarily relieving the lamination pressure significantly or even entirely for a very short period during the first half phase of the pressing step, immediately followed by reapplication of the pressure for the time required for adhesive to cure or to safely remove the sandwich product from the press without any risk of deformation other than the normal elastic recovery in the thickness of the product. This technique serves to relieve the facing material from its stresses that may have developed, e.g., due to the heating of the product.

One practicable method of avoiding the occurrence of wrinkles on the product is to pull the facing against the press platens. For this purpose, a vacuum can be used, or alternatively, if the facing is of a magnetic material, a magnetic field acting on the platen surfaces may be applied. This approach permits the pressure P3 to be lowered, which may be a great advantage, e.g., in cases where otherwise high pressure might be needed due to a mineral wool core of high density.

The invention is suitable for use in both continuous and batch pressing, as well as their intermediate forms involving, e.g., movement of the pressed product in a stepwise manner or at a conveyor speed varying cyclically between a faster and a slower velocity.

## Claims

1. A method of, by means of pressing, laminating a planar, realigned mineral wool slab with a thin, stiff facing such as a polymer-coated sheet steel plate which is bonded with an adhesive to both sides of said mineral wool slab, so as to form a sandwich construction, **cha-racterized in that** the lamination pressing is carried out using a controlled pressure within an intervall limited on one hand by a minimum pressure P1 required to avoid adhesive failure in the adhesive layer and, on the other hand, by the averaged elastic pressure limit P2 of the mineral wool core during the pressing, whereby the included components, i.e. the mineral wool slab, the facing and the adhesive are selected so that the condition P1 < P2 prevails.

2. A method as defined in claim 1, **characterized in that** the upper limit of the pressure is 70 %, advantageously 50 %, of the averaged elastic pressure limit of the mineral wool slab.

3. A method as defined in claim 1 or 2, **characterized in that** the lower limit is the higher of P1 and the pressure P3 which is required to give for the facing the intended, permanent eveness, whereby the included components, i.e. mineral wool slab, the facing and the adhesive are selected so that the condition P1 < P2 and P3 < P2 prevails.

4. A method as defined in any of the foregoing claims, **characterized in that** the mineral wool slab, prior to and during the pressing, is compressed in its principal plane orthogonally to and/or along its longitudinal direction.

5. A method as defined in any of the foregoing claims, **characterized in that** the mineral wool slab is cleaned from loose particulate matter prior to contact with the adhesive.

6. A method as defined in any of the foregoing claims, **characterized in that** the lamination pressure is momentarily relieved significantly or even entirely for a very short period during the first half of the pressing, immediately followed by reapplication of the pressure for the time required for adhesive to cure so that the sandwich product can be removed from the press without any postpressing deformation other than the normal elastic recovery in the thickness of the product.

7. A method as defined in any of the foregoing claims, **characterized in that** the facing is pulled against the press platens with the help of a vacuum or magnetic fields.

8. A method as defined in any of the foregoing claims, **characterized in that** said adhesive is curable under heat or other externally applied influence such as ultrasound and that said external influence is applied during the pressing.

## Patentansprüche

1. Verfahren zum Laminieren durch Pressen einer ebenen, nachgerichteten Mineralwolltafel mit einer dünnen, steifen Auflage, zum Beispiel einer polymerbeschichteten Stahlblechplatte, die mittels eines Klebstoffs mit beiden Seiten der Mineralwolltafel verbunden ist, so daß eine Sandwich-Konstruktion gebildet wird, **dadurch gekennzeichnet, daß** das Laminierungspressen unter Anwendung eines geregelten Drucks ausgeführt wird, und zwar innerhalb eines Intervalls, das begrenzt ist einerseits durch einen Minimaldruck P1, der erforderlich ist, um einen Klebfehler in der Klebstoffschicht zu vermeiden, und andererseits durch die mittlere Elastizitätsdruckgrenze P2 des Mineralwollkerns während des Pressens, wobei die eingeschlossenen Komponenten, das heißt die Mineralwolltafel, die Auflage und der Klebstoff, so gewählt sind, daß die Bedingung P1<P2 vorherrscht.

2. Verfahren nach Anspruch 1, **dadurch gekennzeichnet, daß** die obere Grenze des Drucks 70%, vorzugsweise 50%, der mittleren Elastizitätsdruckgrenze der Mineralwolltafel beträgt.

3. Verfahren nach Anspruch 1 oder 2, **dadurch gekennzeichnet, daß** die untere Grenze der höhere Druck der Drücke P1 und P3 ist, wobei P3 der Druck ist, der erforderlich ist, um der Auflage die beabsichtigte, dauerhafte Ebenheit zu geben, wobei die eingeschlossenen Komponenten, d.h. die Mineralwolltafel, die Auflage und der Klebstoff, so gewählt sind, daß die Bedingungen P1<P2 und P3<P2 vorherrschen.

4. Verfahren nach einem der vorstehenden Ansprüche, **dadurch gekennzeichnet, daß** die Mineralwolltafel vor dem Pressen und während des Pressens in ihrer Hauptebene senkrecht und/oder in ihrer Längsrichtung zusammengedrückt wird.

5. Verfahren nach einem der vorstehenden Ansprüche, **dadurch gekennzeichnet, daß** die Mineralwolltafel vor der Berührung mit dem Klebstoff von losen Teilchen gesäubert wird.

6. Verfahren nach einem der vorstehenden Ansprüche, **dadurch gekennzeichnet, daß** der Laminierungsdruck kurzzeitig erheblich oder sogar vollständig während einer kurzen Zeitspanne in der ersten Hälfte des Pressens entspannt wird, aber unmittelbar danach während der Zeit aufgebracht wird, die zum Aushärten des Klebstoffs erforderlich ist, so daß das Sandwich-Produkt aus der Presse entfernt werden kann, ohne eine andere Verformung nach dem Pressen als die normale elastische Wiederherstellung der Dicke des Produkts.

7. Verfahren nach einem der vorstehenden Ansprüche, **dadurch gekennzeichnet, daß** die Auflage mit Hilfe eines Unterdrucks oder magnetischer Felder an die Preßplatten gezogen wird.

8. Verfahren nach einem der vorstehenden Ansprüche, **dadurch gekennzeichnet, daß** der Klebstoff durch Erwärmung oder durch einen anderen äußeren Einfluß, zum Beispiel Ultraschall, ausgehärtet und der äußere Einfluß während des Pressens ausgeübt wird.

## Revendications

1. Procédé permettant de laminer par pressage une plaque de laine minérale réalignée planaire avec un revêtement fin et rigide, tel qu'une tôle d'acier recouverte de polymère qui est fixée avec un adhésif aux deux côtés de ladite plaque de laine minérale, de telle sorte à former une construction sandwich, **caractérisé en ce que** le pressage de lamination est effectué en utilisant une pression contrôlée dans un intervalle limité d'une part par une pression minimale P1 requise pour éviter une rupture d'adhésion dans la couche adhésive et, d'autre part, par la limite de pression élastique moyenne P2 de l'âme de laine minérale lors du pressage, moyennant quoi les composants compris, à savoir la plaque de laine minérale, le revêtement et l'adhésif sont sélectionnés de sorte à ce que la condition P1 < P2 se vérifie.

2. Procédé selon la revendication 1, **caractérisé en ce que** la limite supérieure de la pression est égale à 70 %, avantageusement à 50 % de la limite de pression élastique moyenne de la plaque de laine minérale.

3. Procédé selon la revendication 1 ou 2, **caractérisé en ce que** la limite supérieure est la limite supérieure de P1 et de la pression P3 qui est nécessaire pour donner au revêtement la régularité permanente prévue, moyennant quoi les composants inclus, à savoir la plaque de laine minérale, le revêtement et l'adhésif sont sélectionnés de sorte à ce que la condition P1 < P2 et P3 < P2 se vérifie.

4. Procédé selon l'une quelconque des revendications précédentes, **caractérisé en ce que** la plaque de laine minérale, avant et pendant le pressage, est comprimée dans son plan principal orthogonalement et/ou le long de sa direction longitudinale.

5. Procédé selon l'une quelconque des revendications précédentes, **caractérisé en ce que** toute matière particulaire détachée est éliminée de la plaque de laine minérale avant contact avec l'adhésif.

6. Procédé selon l'une quelconque des revendications précédentes, **caractérisé en ce que** la pression de lamination est momentanément relâchée de manière significative ou même entièrement pendant une période de temps très courte durant la première moitié du pressage, immédiatement suivie par une réapplication de pression pendant le temps requis pour que l'adhésif sèche de telle sorte que le produit sandwich puisse être retiré de la presse sans déformation après-pressage quelle qu'elle soit autre que la reprise élastique normale dans l'épaisseur du produit.

7. Procédé selon l'une quelconque des revendications précédentes, **caractérisé en ce que** le revêtement est tiré contre les plateaux de la presse à l'aide d'un vide ou de champs magnétiques.

8. Procédé selon l'une quelconque des revendications précédentes, **caractérisé en ce que** ledit adhésif peut être séché à la chaleur ou par une autre influence appliquée depuis l'extérieur telle qu'un ultrason et **en ce que** ladite influence externe est appliquée lors du pressage.
